# EUROPÄISCHE PATENTSCHRIFT

(11) **EP 0 475 899 B1**
(45) Veröffentlichungstag und Bekanntmachung des Hinweises auf die Patenterteilung: **31.05.1995**
(21) Anmeldenummer: 91810698.0
(22) Anmeldetag: 03.09.1991
(51) Int. Cl.: C07F 9/30, C08K 5/5313

(54) **Phosphorverbindungen**
Phosphorus compounds
Composés du phosphore

(30) Priorität: 12.09.1990 CH 2950/90
(43) Veröffentlichungstag der Anmeldung: 18.03.1992
(73) Patentinhaber: CIBA-GEIGY AG, 4002 Basel (CH); CIBA-GEIGY GmbH, 79662 Wehr/Baden (DE)
(72) Erfinder: Hörner, Hans-Peter, Dr., W-7867 Wehr 1 (DE)

(56) Entgegenhaltungen:
- CH-A- 603 674
- DE-A- 1 668 883
- DE-A- 2 532 521
- CHEMICAL ABSTRACTS, Band 111, Nr. 6, 7. August 1989, Columbus, Ohio, USA L.V.PSAREVA et al. "Self-extinguishing compound for sealing high voltagetransformers" Seite 124, Zusammenfassung- Nr. 41 520y

## Beschreibung

Die vorliegende Erfindung betrifft neue Phosphorverbindungen, Polymere enthaltend diese Phosphorverbindungen sowie die Verwendung der Phosphorverbindungen als Flammhemmer für Polymere.

Die Flammwidrigkeit von Polymeren wird im allgemeinen verbessert durch Reduzierung des organischen Anteils; z.B. durch Zugabe von nicht brennbaren bzw. schwerbrennbaren Füllstoffen, wie z.B. Quarzmehl, Glas oder Wollastonit. Allerdings muss der Füllstoffanteil hoch gewählt werden, um einen ausreichenden Flammschutz zu bewirken, was zu unlösbaren Problemen bei der Herstellung und Verarbeitung der Reaktionsharzmassen führen kann.

Eine weitere Möglichkeit ist der Zusatz von Flammschutzmitteln zu den Polymeren. In Frage kommen anorganische Zusätze, wie beispielsweise Borverbindungen oder Metallhydroxide. Auch hier sind grosse Anteile an solchen Zusätzen erforderlich, was sich ebenfalls nachteilig auf die Herstellung und Verarbeitung auswirkt.

Die Verwendung halogenierter Verbindungen, wie Tetrabrombisphenol-A, Decabromdiphenylether oder hochbromierter Polystyrole, ist umstritten, da die Entsorgung so ausgerüsteter Polymerer aus ökologischen Gründen in Frage gestellt ist. Bei der Verbrennung besteht die potentielle Gefahr der Bildung von stark toxischen (dioxinähnlichen) Produkten.

Aus der US Patentschrift 3,689,602 sind halogenierte Phosphorsäureester als flammhemmende Zusätze für Kunststoffe bekannt. Die US-A 4,220,472 beschreibt Dioxaphosphinanoxide als Flammschutzmittel für Polymere, insbesondere für Cellulose.

Der Einsatz von phosphor-organischen Verbindungen zur Flammhemmung, welche nicht in die Polymere eingebaut werden, bedingt einen Weichmachereffekt, was zu einer oft erheblichen Einbusse an mechanischen und elektrischen Eigenschaften der Polymeren führt. So werden z.B. die Festigkeitswerte bzw. die Glasumwandlungstemperatur aufgrund der weichmachenden Wirkung der phosphororganischen Verbindung erniedrigt. Zudem sind diese Verbindungen meist hydrolyseinstabil, was zu einer unerwünschten Wasseraufnahme des Reaktionsharzformstoffes unter gleichzeitiger Bildung von verschiedenen Phosphorsäureverbindungen führt.

Es wurde nun überraschend gefunden, dass durch Zusatz von sauren Estern aus Phosphinsäuren und Dicarbonsäureanhydriden ungefüllte halogenfreie Harze mit selbstverlöschenden Eigenschaften hergestellt werden können.

Die vorliegende Erfindung betrifft Verbindungen der allgemeinen Formel Ia oder Ib 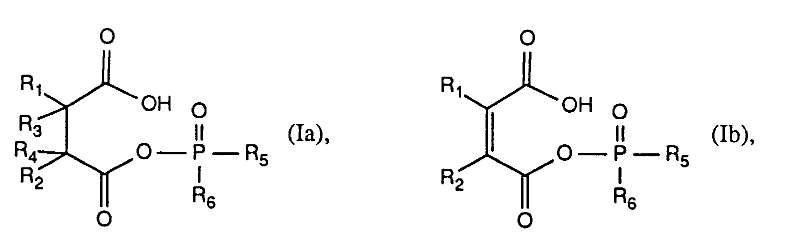
worin R₁ und R₂ unabhängig voneinander für Wasserstoff, Alkyl, Cycloalkyl, Alkenyl, Aryl oder Aralkyl stehen oder zusammen mit den zu den Carbonylgruppen α-ständigen C-Atomen einen unsubstituierten oder mit C₁-C₄-Alkyl substituierten Cyclopentan-, Cyclopenten-, Cyclohexan-, Cyclohexen-, Cyclohexadien- oder Bicyclo[2.2.1]hept-5-enring oder ein unsubstituiertes oder mit C₁-C₄-Alkyl substituiertes ein- oder mehrkerniges aromatisches Ringsystem bilden, R₃ und R₄ unabhängig voneinander Wasserstoff, Alkyl, Alkenyl, Aryl oder Aralkyl bedeuten und R₅ und R₆ unabhängig voneinander Alkyl-, Aryl- oder Aralkylgruppen darstellen.

Durch R₁ und R₂ gebildete Ringe können ein- oder mehrfach durch C₁-C₄-Alkyl, besonders Ethyl und vor allem Methyl, substituiert sein. Bevorzugt sind zwei und insbesondere ein C₁-C₄-Alkylsubstituent.

Bedeuten irgendwelche Substituenten Alkyl, Cycloalkyl oder Alkenyl, so kann es sich dabei um lineares oder verzweigtes Alkyl mit 1 bis 20, bevorzugt 1 bis 6 und besonders bevorzugt 1 bis 4 C-Atomen, Cycloalkyl mit 5 bis 8, insbesondere 5 oder 6 Ringkohlenstoffatomen oder lineares oder verzweigtes Alkenyl mit 2 bis 12, insbesondere 2 bis 6 C-Atomen, handeln. Arylsubstituenten sind mit C₁-C₄-Alkyl substituierte oder unsubstituierte aromatische Gruppen mit 6 bis 14 Ringkohlenstoffatomen. Aralkylgruppen können 7 bis 12 C-Atome enthalten, bevorzugt ist Benzyl.

Beispiele Für definitionsgemässe Reste R₁ bis R₆ sind: Methyl, Ethyl, Propyl, Isopropyl, n-Butyl, i-Butyl, t-Butyl, Pentyl, Hexyl, Octyl, Dodecyl, Tetradecyl, Eicosyl, Cyclopentyl, Cyclohexyl, Methylcyclohexyl, Vinyl, Prop-1-enyl, Prop-2-enyl, n-But-3-enyl, n-Pent-4-enyl, n-Hex-5-enyl, Phenyl, Naphthyl, Biphenyl, Benzyl, Methylbenzyl und Phenylethyl.

Die Substituenten R₅ und R₆ stehen bevorzugt für C₁-C₆-Alkylgruppen, besonders bevorzugt ist R₅ Ethyl und R₆ Methyl.

Bevorzugt sind Verbindungen der Formel Ia oder Ib, worin R₁, R₂, R₃ und R₄ jeweils Wasserstoff bedeuten.

Weiterhin bevorzugt sind Verbindungen der Formel Ia oder Ib, worin R₁ und R₂ zusammen mit den zu den Carbonylgruppen α-ständigen C-Atomen einen mit C₁-C₄-Alkyl substituierten oder unsubstituierten Cyclohexan-, Cyclohexen-, Cyclohexadien-, Bicyclo[2.2.1]hept-5-en- oder Benzolring bilden.

Besonders bevorzugt sind Verbindungen der Formel II, 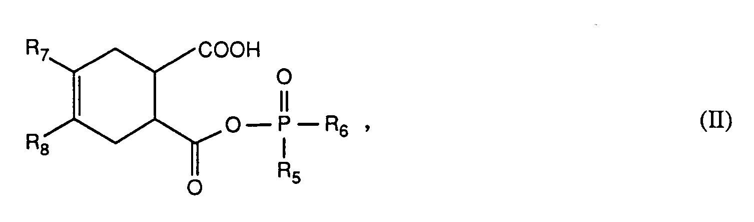
worin R₇ und R₈ unabhängig voneinander Wasserstoff oder C₁-C₄-Alkyl bedeuten und R₅ und R₆ die oben angegebene Bedeutung haben.

Besonders bevorzugt ist die Verbindung der Formel II, worin R₇ eine Methylgruppe, R₈ Wasserstoff, R₅ Ethyl und R₆ Methyl sind.

Die erfindungsgemässen Verbindungen können hergestellt werden, indem man beispielsweise ein Dicarbonsäureanhydrid der Formel IIIa oder IIIb, 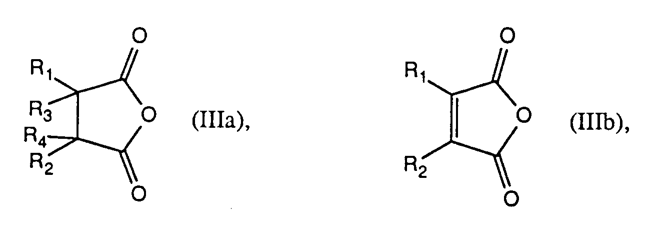
worin die Reste R₁, R₂, R₃ und R₄ die oben angegebene Bedeutung haben, in etwa äquimolaren Mengen mit einer Phosphinsäure der Formel IV 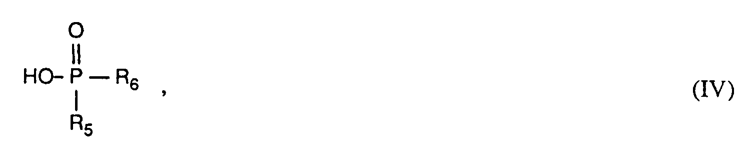
worin R₅ und R₆ die oben angegebene Bedeutung haben, bei erhöhter Temperatur umsetzt.

Die Dicarbonsäureanhydride der Formeln IIIa und IIIb sind bekannt und im Handel erhältlich oder nach bekannten Methoden herstellbar.

Spezifische Beispiele für bevorzugte Verbindungen der Formel IIIa oder IIIb sind: Bemsteinsäureanhydrid, Dodecylbernsteinsäureanhydrid, Tetramethylbernsteinsäureanhydrid, Maleinsäureanhydrid, Methylmaleinsäureanhydrid, Diphenylmaleinsäureanhydrid, Phthalsäureanhydrid, Tetrahydrophthalsäureanhydrid, Methyltetrahydrophthalsäureanhydrid, Hexahydrophthalsäureanhydrid, Methylhexahydrophthalsäureanhydrid, Bicyclo[2.2.1]hept-5-en-2,3-dicarbonsäureanhydrid (Nadic-Anhydrid) und Methyl-bicyclo[2.2.1]hept-5-en-2,3-dicarbonsäureanhydrid (Methylnadic-Anhydrid), Naphthalin-1,8-dicarbonsäureanhydrid.

Besonders bevorzugte Anhydride sind Dodecylbernsteinsäureanhydrid, Methylnadicanhydrid, Hexahydrophthalsäureanhydrid, Methylhexahydrophthalsäureanhydrid und insbesondere Methyltetrahydrophthalsäureanhydrid.

Die Phosphinsäuren der Formel IV sind ebenfalls bekannt (siehe beispielsweise Houben-Weyl, "Methoden der Organischen Chemie", Band XII/1, S. 220 - 240 (1963) und Band E2, S. 123 - 148 (1982)) und zum Teil im Handel erhältlich.

Beispiele für Verbindungen der Formel IV sind: Dimethylphosphinsäure, Ethylmethylphosphinsäure, Diethylphosphinsäure, n-Propylmethylphosphinsäure, n-Propylethylphosphinsäure, Di-n-propylphosphinsäure, Diisopropylphosphinsäure, Diphenylphosphinsäure.

Die Verbindungen der Formel Ia oder Ib sind z.B. als flammhemmende Substanzen für Polymere, insbesondere für Epoxidharze geeignet.

Daher betrifft die vorliegende Erfindung auch Zusammensetzungen enthaltend ein Polymer und mindestens eine Verbindung der Formel Ia oder Ib.

Die Menge der den Polymeren als Flammhemmer zuzusetzenden Verbindungen der Formel Ia oder Ib kann innerhalb weiter Grenzen variieren. Im allgemeinen enthalten die erfindungsgemässen Zusammensetzungen 1 bis 50 Gew.%, bevorzugt 5 bis 40 Gew.% und besonders bevorzugt 15 bis 25 Gew.% einer Verbindung der Formel Ia oder Ib. Die optimale Menge hängt von der Natur des Polymeren und der Art der eingesetzten Verbindung der Formeln Ia und Ib ab und kann leicht durch Versuche ermittelt werden.

Da die Verbindungen der Formel Ia und Ib im allgemeinen schon bei geringen Zusatzmengen wirksam und zudem halogenfrei sind, verursachen sie im Polymeren gegenüber anderen bekannten Flammhemmern weniger unerwünschte Effekte.

Die Verbindungen der Formel Ia oder Ib können je nach Art des verwendeten Polymeren und den gewünschten Eigenschaften in verschiedener physikalischer Form angewendet werden. So können sie z.B. zum Erzielen einer besseren Dispersion im Polymeren zu einer feinteiligen Form vermahlen werden. Falls erwünscht können auch Gemische verschiedener Verbindungen der Formel Ia oder Ib eingesetzt werden.

Die Verbindungen der Formel Ia oder Ib können in verschiedenen Polymeren angewendet werden. Geeignete Polymere, die damit flammfest gemacht werden können, sind z.B.:
1. Polyphenylenoxide und -sulfide sowie Gemische dieser Polymeren mit Polystyrolpfropfpolymeren oder Styrolcopolymeren, wie z.B. hoch schlagfestes Polystyrol, und EPDM-Copolymere mit Kautschuken, sowie Gemische von Polyphenylenoxiden mit Polyamiden und Polyestern.
2. Polyurethane, die sich von Polyethern, Polyestern oder Polybutadien mit endständigen Hydroxylgruppen einerseits und aliphatischen oder aromatischen Polyisocyanaten andererseits ableiten, einschliesslich Polyisocyanurate und Vorläufer davon.
3. Polyamide und Copolyamide, die sich von Diaminen und Dicarbonsäuren und/oder von Aminocarbonsäuren oder den entsprechenden Lactamen ableiten, wie Polamid 4, Polyamid 6, Polyamid 6/6, Polyamid 6/10, Polyamid 11, Polyamid 12, Poly-2,4,4-trimethylhexamethylenterephthalamid oder Poly-m-phenylenisophthalamid sowie Copolymere davon mit Polyethern, wie z.B. mit Polyethylenglykolen, Polypropylenglykolen oder Polytetramethylenglykolen.
4. Polyester, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-dimethylol-cyclohexan-terephthalat und Polyhydroxybenzoate sowie Block-Copolyether-ester, die sich von Polyethern mit endständigen Hydroxylgruppen ableiten.
5. Ungesättigte Polyester die sich von Copolyestern aus gesättigten und ungesättigten Dicarbonsäuren und mehrwertigen Alkoholen und Vinylverbindungen als Vernetzungsmittel ableiten.
6. Polystyrol.
7. Pfropfcopolymere von Styrol, wie z.B. Styrol auf Polybutadien, Styrol und Acrylnitril auf Polybutadien, Styrol und Alkylacrylate oder -methacrylate auf Polybutadien, Styrol und Acrylnitril auf Ethylen/Propylen/Dien-Terpolymere, Styrol und Acrylnitril auf Acrylat/Butadien-Copolymere, sowie Gemische davon mit statistischen Copolymeren aus Styrol oder α-Methylstyrol und Dienen oder Acrylsäurederivaten, wie z.B. die als ABS, MBS, ASA oder AES bekannten Styrol-Terpolymere.
8. Epoxidharze, die sich von Polyepoxiden ableiten, wie z.B. von Bis-diglycidylethern, besonders Bisphenol-A-diglycidylethern, oder von cycloaliphatischen Diepoxiden.
9. Polycarbonate.

Insbesondere geeignet sind die Verbindungen der Formel Ia oder Ib zur Flammfest-Ausrüstung von Epoxidharzen, wie z.B. Bisphenol-A-Harzen, Bisphenol-F-Harzen, Phenol- und Kresolnovolakepoxidharzen, die mit Carbonsäureanhydriden, wie beispielsweise Phthalsäureanhydrid, Hexahydrophthalsäureanhydrid, Methyltetrahydrophthalsäureanhydrid, Methylhexahydrophthalsäureanhydrid oder Methylnadicsäureanhydrid, gehärtet werden.

Der Vorteil bei dieser Anwendung besteht darin, dass die Phosphorverbindung der Formel Ia oder Ib dem Anhydrid-Härter beigemischt und in das Polymergerüst reaktiv eingebaut wird. Auf diese Weise wird ein Formstoff mit selbstverlöschenden Eigenschaften erhalten, ohne dass andere flammhemmende Substanzen zugegeben werden.

Die Harter-Mischungen enthalten vorzugsweise 10 - 60 Gew.%, insbesondere 30 - 50 Gew.% eines sauren Esters der Formel Ia oder Ib und 90 - 40 Gew.%, insbesondere 70 - 50 Gew.% eines Dicarbonsäureanhydrids.

Die erfindungsgemässen ungefüllten und halogenfreien Reaktionsharzmassen auf Epoxidharzbasis z.B. können als Giess- und Laminierharze und auf dem Gebiet der Elektronikumhüllungssysteme eingesetzt werden.

Die erfindungsgemässen Zusammensetzungen können auch weitere übliche Zusätze enthalten, wie z.B. Hitzestabilisatoren, Lichtstabilisatoren, UV-Absorber, Antioxidantien, antistatische Mittel, Konservierungsmittel, Haftvermittler, Füllstoffe, Pigmente, Schmierstoffe, Verschäumungsmittel, Fungizide, Weichmacher, Verarbeitungshilfsmittel, weitere flammhemmende Zusätze und Mittel zum Verringern der Rauchentwicklung.

Als zusätzliche Flammhemmer, die zusammen mit den erfindungsgemäss verwendeten Verbindungen der Formel Ia bzw. Ib eingesetzt werden können, kommen z.B. phosphorhaltige Salze, wie z.B. Ammoniumpolyphosphate, Antimontrioxid, Aluminiumhydroxid, Wismutoxid, Molybdänoxid oder Gemische dieser Verbindungen mit Zink- und/oder Magnesiumoxid oder -salzen, in Betracht.

Die Erfindung wird durch die folgenden Beispiele näher erläutert.

### Herstellungssbeispiel

### Beispiel1: saurer Ester aus 4-Methylcyclohex-4-en-dicarbonsäureanhydrid und Ethylmethylphosphinsäure

166 g (1 mol) 4-Methylcyclohex-4-en-dicarbonsäureanhydrid werden mit 108 g (1 mol) Ethylmethylphosphinsäure gemischt und 4 Stunden unter Stickstoffatmosphäre bei 100 °C intensiv gerührt. Anschliessend wird der saure Ester unter Vakuum aus dem Reaktionsgemisch abdestilliert (Kp._{0,001}= 180 °C). Ausbeute: 214,5 g (80 %).

### Anwendungsbeispiele

### Beispiele A - C:

Der nach Beispiel 1 hergestellte saure Ester wird in drei verschiedenen Verhältnissen mit 4-Methyl-cyclohex-4-en-1,2-dicarbonsäureanhydrid gemischt. Die Zusammensetzungen der so erhaltenen Härtermischungen sind in Tabelle 1 angegeben.

**Tabelle 1**

| Härtermischung | A | B | C |
|---|---|---|---|
| 4-Methylcyclohex-4-en-1,2-dicarbonsäureanhydrid | 70 | 60 | 50 |
| saurer Ester aus Beispiel 1 (Gew.%) | 30 | 40 | 50 |

Die Hartermischungen A, B und C werden mit einem Epoxidharz auf Basis von Bisphenol-A mit einem Epoxidgruppengehalt von 5,25 - 5,40 val/kg im Verhältnis 1:1 umgesetzt. Zur Erhöhung der Reaktivität werden 2 Gew.% N-Benzyldimethylamin als Beschleuniger zugefügt. Die Gemische werden 1h bei 80 °C und anschliessend 3h bei 120 °C ausgehärtet. Die so erhaltenen gehärteten Formstoffe werden auf ihre flammhemmende Wirkung nach der Norm von Underwriters Laboratories Inc. UL 94, dritte Ausgabe (Revision) vom 25. Sept. 1981 (Horizontale Brennbarkeitsprüfung) geprüft.

Ausserdem werden verschiedene mechanische und dielektrische Eigenschaften der Formstoffe gemessen. Die Resultate sind in Tabelle 2 zusammengefasst.

**Tabelle 2**

| Formstoff | | A | B | C |
|---|---|---|---|---|
| Phosphorgehalt (Gew.%) | | 1,78 | 2,38 | 2,97 |
| Glasübergangstemperatur T_{g} (°C) | | 99 | 95 | 93 |

| Flammhemmung nach UL 94 | | | | |
|---|---|---|---|---|
| mit 6 mm-Platten | | V-1 | V-0 | V-0 |
| mit 4 mm-Platten | | V-1 | V-0 | V-0 |
| mit 2 mm-Platten | | k.E.* | V-1 | V-0 |
| Schlagbiegefestigkeit (kJ/m²⁾ | | 11,7 | 9,3 | 5,1 |
| Biegefestigkeit (N/mm²) | | 121 | 98 | 78 |
| Elastizitätsmodul (N/mm²) | | 4220 | 4105 | 3360 |
| Zugfestigkeit (N/mm²) | | 78,5 | 66,5 | 43,5 |
| Druckfestigkeit (N/mm²) | | 140 | 136 | 100 |
| relative Dielektrizitätszahl εᵣ | bei 23 °C | 3,35 | 3,42 | 3,39 |
| | bei 50 °C | 3,33 | 3,38 | 3,45 |
| | bei 100°C | 4,28 | 4,78 | 5,25 |
| dielektrischer Verlustfäktor tan δ | bei 23 °C | 0,0032 | 0,0032 | 0,0032 |
| | bei 50 °C | 0,0028 | 0,0028 | 0,0026 |
| | bei 100 °C | 0,0715 | 0,121 | 0,185 |

| | | | | |
|---|---|---|---|---|
| * k.E.: keine Einordnung | | | | |

## Patentansprüche (Patentansprüche für folgende(n) Vertragsstaat(en): CH, DE, FR, GB, IT, LI)

1. Verbindungen der Formel Ia oder Ib 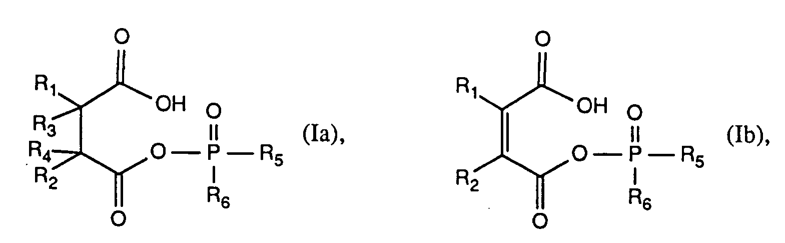 worin R₁ und R₂ unabhängig voneinander für Wasserstoff, Alkyl, Cycloalkyl, Alkenyl, Aryl oder Aralkyl stehen oder zusammen mit den zu den Carbonylgruppen α-ständigen C-Atomen einen unsubstituierten oder mit C₁-C₄-Alkyl substituierten Cyclopentan-, Cyclopenten-, Cyclohexan-, Cyclohexen-, Cyclohexadien- oder Bicyclo[2.2.1]hept-5-enring oder ein unsubstituiertes oder mit C₁-C₄-Alkyl substituiertes ein- oder mehrkerniges aromatisches Ringsystem bilden, R₃ und R₄ unabhängig voneinander Wasserstoff, Alkyl, Alkenyl, Aryl oder Aralkyl bedeuten und R₅ und R₆ unabhängig voneinander Alkyl-, Aryl- oder Aralkylgruppen darstellen.

2. Verbindungen der Formel Ia oder Ib gemäss Anspruch 1, worin R₅ und R₆ C₁-C₆-Alkylgruppen darstellen.

3. Verbindungen der Formel Ia oder Ib gemäss Anspruch 2, worin R₅ Ethyl und R₆ Methyl ist.

4. Verbindungen der Formel Ia oder Ib gemäss Anspruch 1, worin R₁, R₂, R₃ und R₄ jeweils Wasserstoff bedeuten.

5. Verbindungen der Formel Ia oder Ib gemäss Anspruch 1, worin R₁ und R₂ zusammen mit den zu den Carbonylgruppen α-ständigen C-Atomen einen mit C₁-C₄-Alkyl substituierten oder unsubstituierten Cyclohexan-, Cyclohexen-, Cyclohexadien-, Bicyclo[2.2.1]hept-5-en- oder Benzolring bilden.

6. Verbindungen der Formel II gemäss Anspruch 1 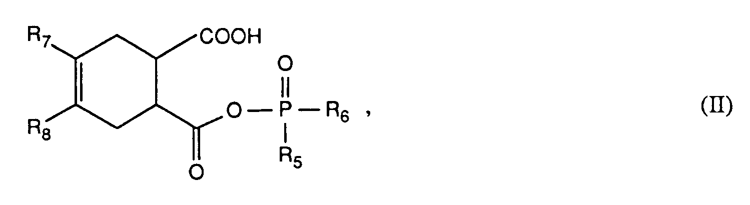 worin R₇ und R₈ unabhängig voneinander Wasserstoff oder C₁-C₄-Alkyl bedeuten und R₅ und R₆ die in Anspruch 1 angegebene Bedeutung haben.

7. Verbindung gemäss Anspruch 6, worin R₇ eine Methylgruppe, R₈ Wasserstoff, R₅ Ethyl und R₆ Methyl sind.

8. Verfahren zur Herstellung von Verbindungen der Formel Ia oder Ib gemäss Anspruch 1, dadurch gekennzeichnet, dass man ein Dicarbonsäureanhydrid der Formel IIIa oder IIIb, 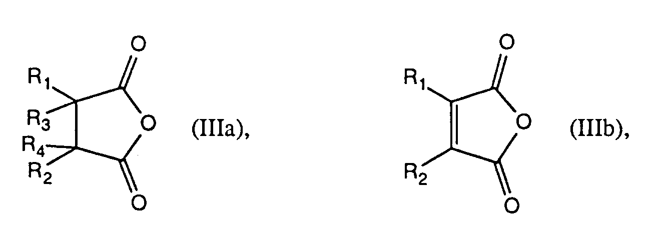 worin die Reste R₁, R₂, R₃ und R₄ die in Anspruch 1 angegebene Bedeutung haben, in etwa äquimolaren Mengen mit einer Phosphinsäure der Formel IV, 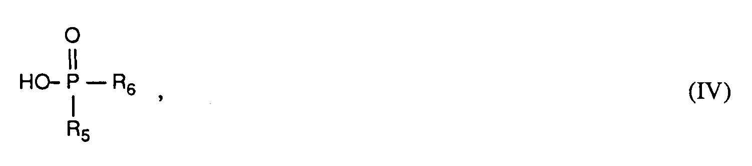 worin R₅ und R₆ die in Anspruch 1 angegebene Bedeutung haben, bei erhöhter Temperatur umsetzt.

9. Zusammensetzungen enthaltend ein Polymer und mindestens eine Verbindung der Formel Ia oder Ib nach Anspruch 1.

10. Zusammensetzungen gemäss Anspruch 9, enthaltend 1 bis 50 Gew%, bevorzugt 5 bis 40 Gew.% einer Verbindung der Formel Ia oder Ib.

11. Zusammensetzungen gemäss Anspruch 9, enthaltend ein Epoxidharz.

12. Zusammensetzungen gemäss Anspruch 11, enthaltend als Harter eine Mischung aus 40 bis 90 Gew.% eines Dicarbonsäureanhydrids und 60 bis 10 Gew.% einer Verbindung der Formel Ia oder Ib gemäss Anspruch 1.

13. Verwendung der Verbindungen der Formel Ia oder Ib nach Anspruch 1 als Flammhemmer für Polymere.

## Patentansprüche (Patentansprüche für folgende(n) Vertragsstaat(en): ES)

1. Verfahren zur Herstellung von Verbindungen der Formel Ia oder Ib 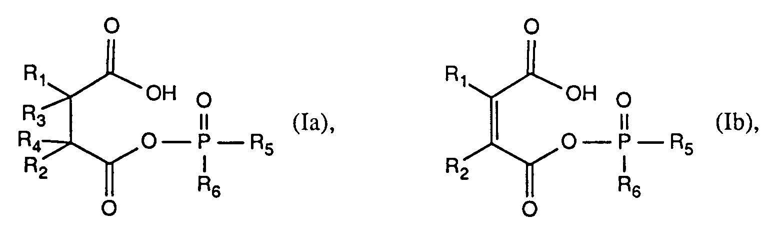 worin R₁ und R₂ unabhängig voneinander für Wasserstoff, Alkyl, Cycloalkyl, Alkenyl, Aryl oder Aralkyl stehen oder zusammen mit den zu den Carbonylgruppen α-ständigen C-Atomen einen unsubstituierten oder mit C₁-C₄-Alkyl substituierten Cyclopentan-, Cyclopenten-, Cyclohexan-, Cyclohexen-, Cyclohexadien- oder Bicyclo[2.2.1]hept-5-enring oder ein unsubstituiertes oder mit C₁-C₄-Alkyl substituiertes ein- oder mehrkerniges aromatisches Ringsystem bilden, R₃ und R₄ unabhängig voneinander Wasserstoff, Alkyl, Alkenyl, Aryl oder Aralkyl bedeuten und R₅ und R₆ unabhängig voneinander Alkyl-, Aryl- oder Aralkylgruppen darstellen,
dadurch gekennzeichnet, dass man ein Dicarbonsäureanhydrid der Formel IIIa oder IIIb, 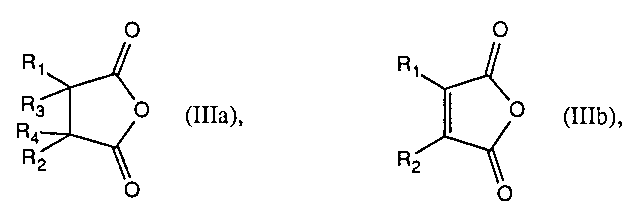 worin die Reste R₁, R₂, R₃ und R₄ die oben angegebene Bedeutung haben, in etwa äquimolaren Mengen mit einer Phosphinsäure der Formel IV, 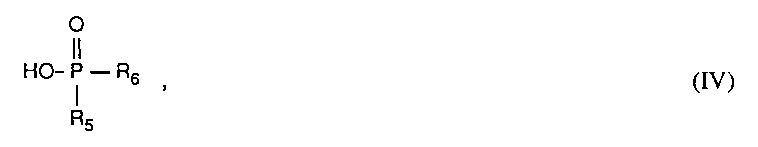 worin R₅ und R₆ die oben angegebene Bedeutung haben, bei erhöhter Temperatur umsetzt.

2. Verfahren zur Herstellung von Verbindungen der Formel Ia oder Ib gemäss Anspruch 1, worin R₅ und R₆ C₁-C₆-Alkylgruppen darstellen.

3. Verfahren zur Herstellung von Verbindungen der Formel Ia oder Ib gemäss Anspruch 2, worin R₅ Ethyl und R₆ Methyl ist.

4. Verfahren zur Herstellung von Verbindungen der Formel Ia oder Ib gemäss Anspruch 1, worin R₁, R₂, R₃ und R₄ jeweils Wasserstoff bedeuten.

5. Verfahren zur Herstellung von Verbindungen der Formel Ia oder Ib gemäss Anspruch 1, worin R₁ und R₂ zusammen mit den zu den Carbonylgruppen α-ständigen C-Atomen einen mit C₁-C₄-Alkyl substituierten oder unsubstituierten Cyclohexan-, Cyclohexen-, Cyclohexadien-, Bicyclo[2.2.1]hept-5-en- oder Benzolring bilden.

6. Verfahren zur Herstellung von Verbindungen der Formel II gemäss Anspruch 1 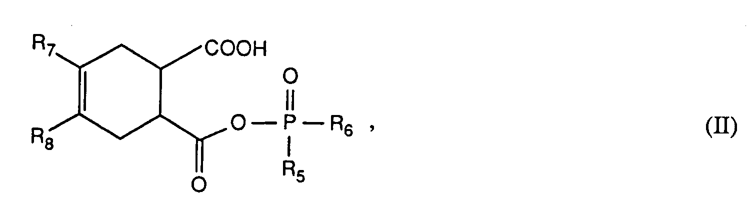 worin R₇ und R₈ unabhängig voneinander Wasserstoff oder C₁-C₄-Alkyl bedeuten und R₅ und R₆ die in Anspruch 1 angegebene Bedeutung haben.

7. Verfahren zur Herstellung einer Verbindung der Formel (II) gemäss Anspruch 6, worin R₇ eine Methylgruppe, R₈ Wasserstoff, R₅ Ethyl und R₆ Methyl sind.

8. Zusammensetzungen enthaltend ein Polymer und mindestens eine Verbindung der Formel Ia oder Ib nach Anspruch 1.

9. Zusammensetzungen gemäss Anspruch 8, enthaltend 1 bis 50 Gew%, bevorzugt 5 bis 40 Gew.% einer Verbindung der Formel Ia oder Ib.

10. Zusammensetzungen gemäss Anspruch 8, enthaltend ein Epoxidharz.

11. Zusammensetzungen gemäss Anspruch 10, enthaltend als Härter eine Mischung aus 40 bis 90 Gew.% eines Dicarbonsäureanhydrids und 60 bis 10 Gew.% einer Verbindung der Formel Ia oder Ib gemäss Anspruch 1.

12. Verwendung der Verbindungen der Formel Ia oder Ib nach Anspruch 1 als Flammhemmer für Polymere.

## Claims (Claims for the following Contracting State(s): CH, DE, FR, GB, IT, LI)

1. A compound of the formula Ia or Ib 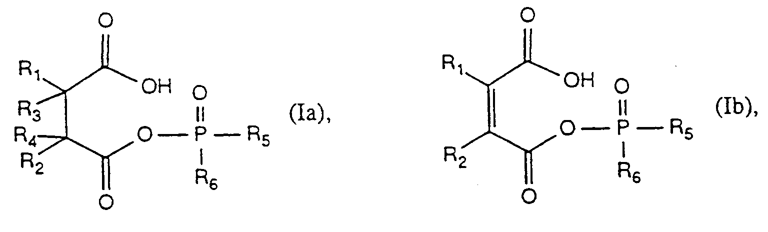 in which R₁ and R₂, independently of one another, are hydrogen, alkyl, cycloalkyl, alkenyl, aryl or aralkyl or, together with the carbon atoms in the α-position to the carbonyl groups, form a cyclopentane, cyclopentene, cyclohexane, cyclohexene, cyclohexadiene or bicyclo[2.2.1]hept-5-ene ring which is unsubstituted or substituted by C₁-C₄alkyl, or form a monocyclic or polycyclic, aromatic ring system which is unsubstituted or substituted by C₁-C₄alkyl, R₃ and R₄, independently of one another, are hydrogen, alkyl, alkenyl, aryl or aralkyl, and R₅ and R₆, independently of one another, are alkyl, aryl or aralkyl groups.

2. A compound of the formula Ia or Ib according to claim 1, in which R₅ and R₆ are C₁-C₆alkyl groups.

3. A compound of the formula Ia or Ib according to claim 2, in which R₅ is ethyl and R₆ is methyl.

4. A compound of the formula Ia or Ib according to claim 1, in which R₁, R₂, R₃ and R₄ are each hydrogen.

5. A compound of the formula Ia or Ib according to claim 1, in which R₁ and R₂, together with the carbon atoms in the α-position to the carbonyl groups, form a C₁-C₄alkyl-substituted or unsubstituted cyclohexane, cyclohexene, cyclohexadiene, bicyclo[2.2.1]hept-5-ene or benzene ring.

6. A compound of the formula II according to claim 1 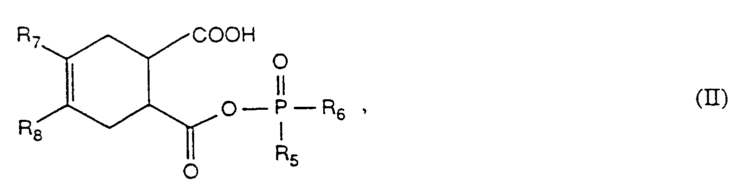 in which R₇ and R₈, independently of one another, are hydrogen or C₁-C₄alkyl, and R₅ and R₆ are as defined in claim 1.

7. A compound according to claim 6, in which R₇ is a methyl group, R₈ is hydrogen, R₅ is ethyl and R₆ is methyl.

8. A process for the preparation of a compound of the formula Ia or Ib according to claim 1, wherein a dicarboxylic anhydride of the formula IIIa or IIIb 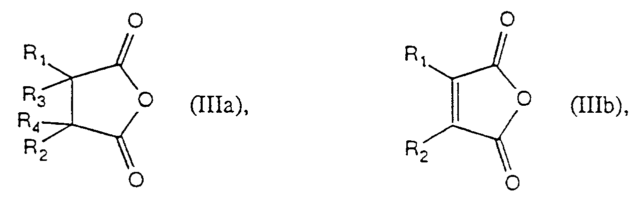 in which the radicals R₁, R₂, R₃ and R₄ are as defined in claim 1, is reacted in approximately equimolar amounts with a phosphinic acid of the formula IV 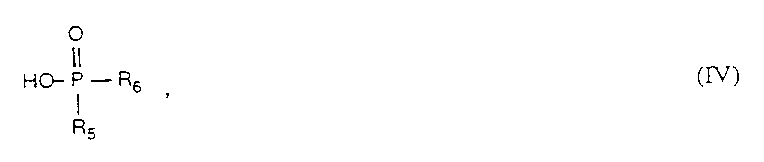 in which R₅ and R₆ are as defined in claim 1, at elevated temperature.

9. A composition comprising a polymer and at least one compound of the formula Ia or Ib according to claim 1.

10. A composition according to claim 9, containing from 1 to 50 % by weight, preferably from 5 to 40 % by weight, of a compound of the formula Ia or Ib.

11. A composition according to claim 9, containing an epoxy resin.

12. A composition according to claim 11, containing, as curing agent, a mixture of from 40 to 90 % by weight of a dicarboxylic anhydride and from 60 to 10 % by weight of a compound of the formula Ia or Ib according to claim 1.

13. The use of a compound of the formula Ia or Ib according to claim 1 as a flame retardant for polymers.

## Claims (Claims for the following Contracting State(s): ES)

1. A process for the preparation of a compound of the formula Ia or Ib 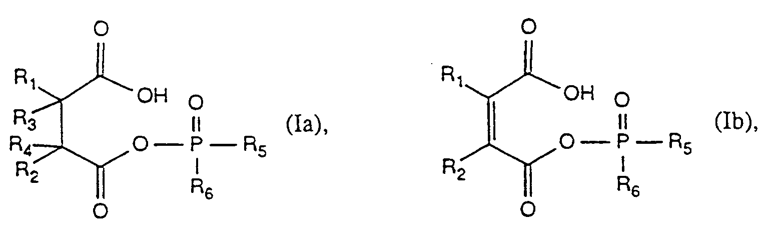 in which R₁ and R₂, independently of one another, are hydrogen, alkyl, cycloalkyl, alkenyl, aryl or aralkyl or, together with the carbon atoms in the α-position to the carbonyl groups, form a cyclopentane, cyclopentene, cyclohexane, cyclohexene, cyclohexadiene or bicyclo[2.2.1]hept-5-ene ring which is unsubstituted or substituted by C₁-C₄alkyl, or form a monocyclic or polycyclic, aromatic ring system which is unsubstituted or substituted by C₁-C₄alkyl, R₃ and R₄, independently of one another, are hydrogen, alkyl, alkenyl, aryl or aralkyl, and R₅ and R₆, independently of one another, are alkyl, aryl or aralkyl groups, wherein a dicarboxylic anhydride of the formula IIIa or IIIb 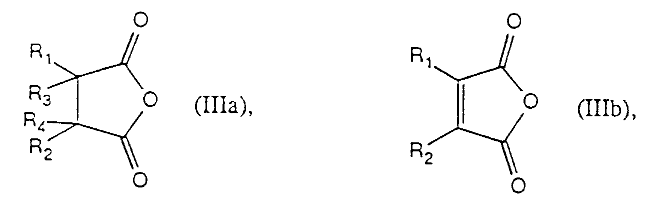 in which the radicals R₁, R₂, R₃ and R₄ are as defined above, is reacted in approximately equimolar amounts with a phosphinic acid of the formula IV 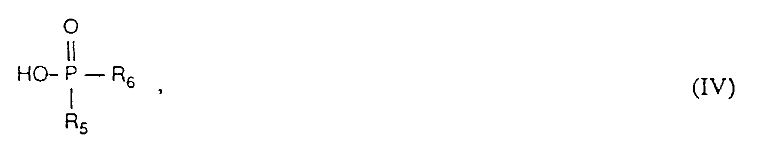 in which R₅ and R₆ are as defined above, at elevated temperature.

2. A process for the preparation of a compound of the formula Ia or Ib according to claim 1, in which R₅ and R₆ are C₁-C₆alkyl groups.

3. A process for the preparation of a compound of the formula Ia or Ib according to claim 2, in which R₅ is ethyl and R₆ is methyl.

4. A process for the preparation of a compound of the formula Ia or Ib according to claim 1, in which R₁, R₂, R₃ and R₄ are each hydrogen.

5. A process for the preparation of a compound of the formula Ia or Ib according to claim 1, in which R₁ and R₂, together with the carbon atoms in the α-position to the carbonyl groups, form a C₁-C₄alkyl-substituted or unsubstituted cyclohexane, cyclohexene, cyclohexadiene, bicyclo[2.2.1]hept-5-ene or benzene ring.

6. A process for the preparation of a compound of the formula II according to claim 1 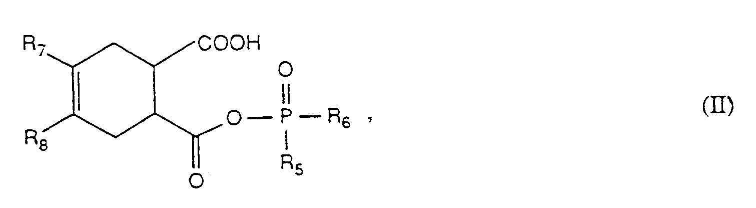 in which R₇ and R₈, independently of one another, are hydrogen or C₁-C₄alkyl, and R₅ and R₆ are as defined in claim 1.

7. A process for the preparation of a compound of the formula (II) according to claim 6, in which R₇ is a methyl group, R₈ is hydrogen, R₅ is ethyl and R₆ is methyl.

8. A composition comprising a polymer and at least one compound of the formula Ia or Ib according to claim 1.

9. A composition according to claim 8, containing from 1 to 50 % by weight, preferably from 5 to 40 % by weight, of a compound of the formula Ia or Ib.

10. A composition according to claim 8, containing an epoxy resin.

11. A composition according to claim 10, containing, as curing agent, a mixture of from 40 to 90 % by weight of a dicarboxylic anhydride and from 60 to 10 % by weight of a compound of the formula Ia or Ib according to claim 1.

12. The use of a compound of the formula Ia or Ib according to claim 1 as a flame retardant for polymers.

## Revendications (Revendications pour l'(les) Etat(s) contractant(s) suivant(s): CH, DE, FR, GB, IT, LI)

1. Composés de formule générale 1a ou 1b, 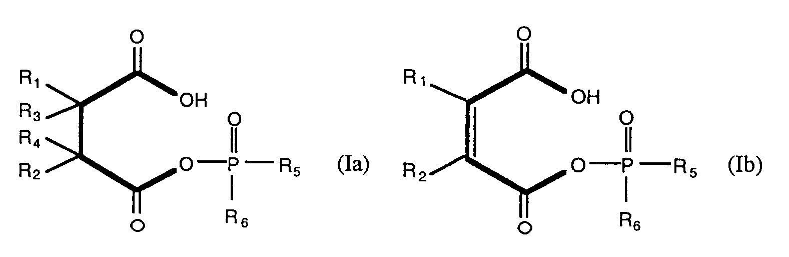 dans lesquels R₁ et R₂, indépendamment l'un de l'autre, représentent un hydrogène, un alkyle, un cycloalkyle, un alcényle, un aryle ou aralkyle ou bien forment avec les atomes de carbone en position α par rapport aux groupes carbonyles un cycle cyclopentane, cyclopentène, cyclohexane, cyclohexène, cyclohexadiène ou bicyclo[2.2.1]hept-5-ène, non substitué ou substitué par des alkyles en C₁-C₄, ou bien un système cyclique aromatique à un ou plusieurs noyaux, non substitués ou substitués par des alkyles en C₁-C₄, R3 et R4, indépendamment l'un de l'autre, signifient un hydrogène, un alkyle, un alcényle, un aryle ou un aralkyle et R₅ et R₆, indépendamment l'un de l'autre, représentent des groupes alkyle, aryle ou aralkyle.

2. Composés de formule Ia ou Ib selon la revendication 1, dans lesquels R₅ et R₆ représentent des groupes alkyles en C₁-C₆.

3. Composés de formule Ia ou Ib selon la revendication 2, dans laquelle R₅ est l'éthyle et R₆ est le méthyle.

4. Composés de formule Ia ou Ib selon la revendication 1, dans lesquels R₁, R₂, R₃ et R₄ signifient à chaque fois l'hydrogène.

5. Composés de formule Ia ou Ib, dans lesquels R₁ et R₂ forment avec les atomes de carbone se trouvant en position α des groupes carbonyle, un cycle cyclohexane, cyclohexène, cyclohexadiène, bicyclo[2.2.1]hept-5-ène ou benzène non substitué ou substitué par des alkyles en C₁-C₄.

6. Composés de formule II, selon la revendication 1 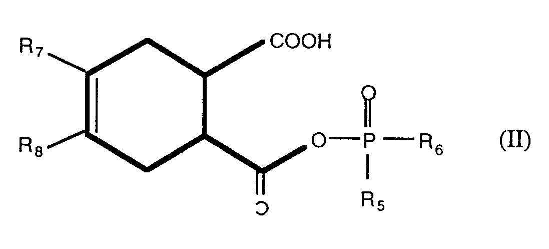 dans laquelle R₇ et R₈, indépendamment l'un de l'autre, signifient un hydrogène ou un alkyle en C₁-C₄ et R₅ et R₆ ont la signification donnée dans la revendication 1.

7. Composé selon la revendication 6, dans lequel R₇ est un groupe méthyle, R₈ un hydrogène, R₅ un éthyle et R₆ un méthyle.

8. Procédé de préparation des composés de formule Ia ou Ib selon la revendication 1, caractérisé en ce qu'on fait réagir un anhydride d'acide dicarboxylique de formule IIIa ou IIIb, 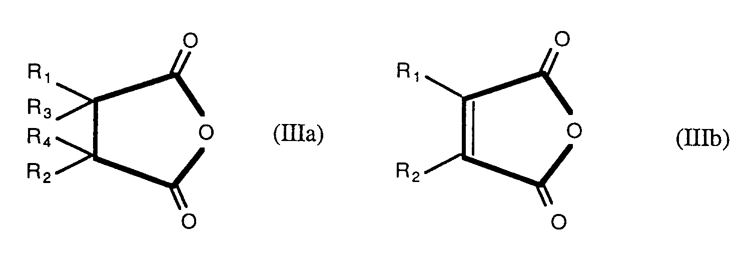 dans lesquels les restes R₁, R₂, R₃ et R₄ ont la signification donnée dans la revendication 1, dans des quantités environ équimoléculaires avec un acide phosphinique de formule IV 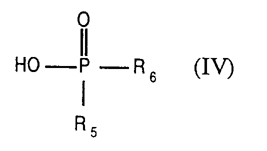 dans laquelle R₅ et R₆ ont la signification donnée dans la revendication 1, ceci à des températures élevées.

9. Compositions contenant un polymère et au moins un composé de formule Ia ou Ib selon la revendication 1.

10. Compositions selon la revendication 9, contenant de 1 à 50 % en poids d'un composé de formule Ia ou Ib, de préférence de 5 à 40 % en poids.

11. Compositions selon la revendication 9, contenant une résine époxy.

12. Compositions selon la revendication 11, contenant en tant que durcisseur un mélange de 40 à 90 % en poids d'un anhydride d'acide dicarboxylique et de 60 à 10 % en poids d'un composé de formule Ia ou Ib selon la revendication 1.

13. Utilisation des composés de formule Ia ou Ib selon la revendication 1 en tant que retardant de flammes pour polymères.

## Revendications (Revendications pour l'(les) Etat(s) contractant(s) suivant(s): ES)

1. Procédé de préparation de composés de formule générale 1a ou 1b, 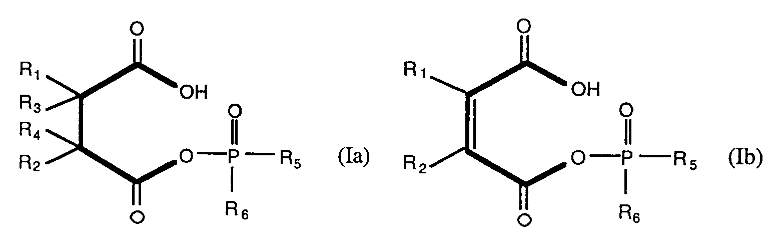 dans lesquels R₁ et R₂, indépendamment l'un de l'autre, représentent un hydrogène, un alkyle, un cycloalkyle, un alcényle, un aryle ou aralkyle ou bien forment avec les atomes de carbone en position α par rapport aux groupes carbonyles un cycle cyclopentane, cyclopentène, cyclohexane, cyclohexène, cyclohexadiène ou bicyclo[2.2.1]hept-5-ène, non substitué ou substitué par des alkyles en C₁-C₄, ou bien un système cyclique aromatique à un ou plusieurs noyaux, non substitués ou substitués par des alkyles en C₁-C₄, R₃ et R₄, indépendamment l'un de l'autre, signifient un hydrogène, un alkyle, un alcényle, un aryle ou un aralkyle et R₅ et R₆, indépendamment l'un de l'autre, représentent des groupes alkyle, aryle ou aralkyle, caractérisé en ce qu'on fait réagir un anhydride d'acide dicarboxylique de formule IIIa ou IIIb, 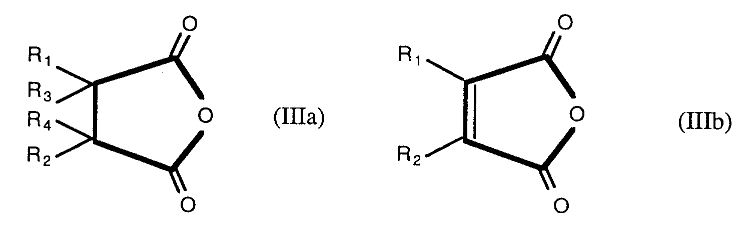 dans lesquels les restes R₁, R₂, R₃ et R₄ ont la signification donnée ci-dessus, dans des quantités environ équimoléculaires avec un acide phosphinique de formule IV 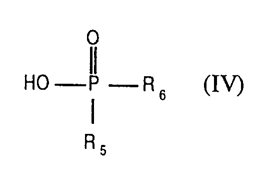 dans laquelle R₅ et R₆ ont la signification donnée ci-dessus, ceci à des températures élevées.

2. Procédé de préparation de composés de formule Ia ou Ib selon la revendication 1, dans lesquels R₅ et R₆ représentent des groupes alkyles en C₁-C₆.

3. Procédé de préparation de composés de formule Ia ou Ib selon la revendication 2, dans laquelle R₅ est l'éthyle et R₆ le méthyle.

4. Procédé de préparation de composés de formule Ia ou Ib selon la revendication 1, selon lesquels R₁, R₂, R₃ et R₄ signifient à chaque fois l'hydrogène.

5. Procédé de préparation de composés de formule Ia ou Ib, dans lesquels R₁ et R₂ forment avec les atomes de carbone se trouvant en position α des groupes carbonyles, un cycle cyclohexane, cyclohexène, cyclohexadiène, bicyclo[2.2.1]hept-5-ène ou benzène non substitué ou substitué par des alkyles en C₁-C₄.

6. Procédé de préparation de composés de formule II, selon la revendication 1, 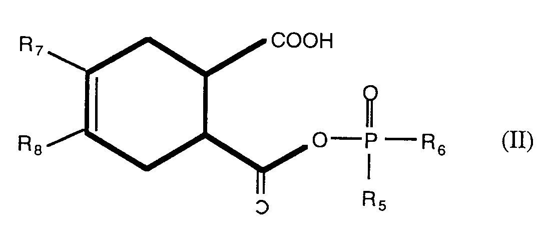 dans laquelle R₇ et R₈, indépendamment l'un de l'autre, signifient un hydrogène ou un alkyle en C₁-C₄ et R₅ et R₆ ont la signification donnée dans la revendication 1.

7. Procédé de préparation d'un composé de formule (II) selon la revendication 6, dans laquelle R₇ est un groupe méthyle, R₈ un hydrogène, R₅ un éthyle et R₆ un méthyle.

8. Compositions contenant un polymère et au moins un composé de formule Ia ou Ib selon la revendication 1.

9. Compositions selon la revendication 8, contenant de 1 à 50 % en poids d'un composé de formule Ia ou Ib, de préférence de 5 à 40 % en poids.

10. Compositions selon la revendication 8, contenant une résine époxy.

11. Compositions selon la revendication 10, contenant en tant que durcisseur un mélange de 40 à 90 % en poids d'un anhydride d'acide dicarboxylique et de 60 à 10 % en poids d'un composé de formule Ia ou Ib selon la revendication 1.

12. Utilisation des composés de formule Ia ou Ib selon la revendication 1 en tant que retardant de flamme pour polymères.
